# EUROPEAN PATENT SPECIFICATION

(11) **EP 1 629 168 B1**
(45) Date of publication and mention of the grant of the patent: **01.08.2012**
(21) Application number: 03712470.8
(22) Date of filing: 03.03.2003
(51) Int. Cl.: E05D 15/06, F16C 13/00, F16C 29/04

(54) **DEVICE FOR GUIDING OF SLIDING CONSTRUCTIONS**
VORRICHTUNG ZUR FÜHRUNG VON VERSCHIEBBAREN ELEMENTEN
DISPOSITIF DE GUIDAGE DE CONSTRUCTIONS COULISSANTES

(43) Date of publication of application: 01.03.2006
(73) Proprietor: Badzim, Milenko, 22221 Lozovac (HR)
(72) Inventor: Badzim, Milenko, 22221 Lozovac (HR)
(74) Representative: Zekic, Ante
(86) International application number: PCT/HR2003/000009
(87) International publication number: WO 2004/079138

(56) References cited:
- EP-A- 1 225 293
- DE-A- 10 036 765
- FR-E- 46 590

## Description

### 1. FIELD OF APPLICATION

The invention relates to devices fitted to sliding-construction guide beams, that enable easy, precise, silent and safe guiding of guide beams as well as entire sliding structures, such as doors, windows and similar constructions, when such constructions are being moved longitudinally.

In the International Patent Classification, it is classified as Section E - Fixed constructions, Subsection E 05 F - Devices for moving wings into open or closed position; Checks for wings; Wing fittings not otherwise provided for, concerned with the functioning of the wing.

### 2. TECHNICAL PROBLEM

With sliding doors, windows and similar sliding constructions, there is present the problem of paint peeling and damages to contact surfaces caused by friction between the sliding-construction guide beams and contact surfaces of the guiding device. Besides, the sliding constructions move with difficulties because of lack of precision in manufacturing the guiding wheels and guiding beams. Between the guiding wheels and guiding beams there must be a small clearance, and this causes noise when moved. In winters, rain easily penetrates the guiding-wheel bearings which freeze and this causes great problems including possible damages and injuries when such a construction is operated. This also increases the maintenance costs.

The technical problem that is solved by this invention relates to designing of a device that enables easy, silent, permanently precise and safe guidance of sliding constructions, especially in sliding doors.

### 3. STATE OF THE ART

There are various sorts of devices for guiding of sliding doors, windows and similar constructions. Parts of such devices are made of metals or combinations of metals and plastics. The shortcoming of devices made of metal is in the sliding guiding surfaces being exposed to friction, which damages paint and surface of the guide beams. Poor lubrication and friction of metal wheels against normally metal guide-beams cause noise and resistance when operated. Such shortcoming were attempted to solve through fitting of plastic wheels that get in contact with guide beams, which eased the above problems partly, jet not fully, since plastic part break, wear and bend.

The patent documents EP 1 1225293 A1 and FR No 46 590 E state guide wheels on sliding bearings. The contact surfaces between the wheels and the guide beams are larger and, therefore, taking uneven areas harder, producing larger resistance and making larger noise. The sliding bearings may be penetrated by dust and water. They are not protected against grease leakage, which decreases the life of the construction.

### 4. DISCLOSURE OF THE INVENTION

The essence of the invention is a device for guiding of sliding door or window wings or other sliding constructions, with fitted guiding wheels equipped with rubber rings and roller or ball bearings. A device includes at least two guiding wheels between which slides the guided door or window wing or another construction. Such a device enables easy, silent, safe and permanently precise guidance of sliding wings (with no clearance between the guiding wheels and the guide beam), not damaging the guide beam and requiring almost no maintenance of the slide constructions.

### 5. ILLUSTRATION DESCRIPTIONS

- Figure 1.: shows the device for guiding of sliding doors or other constructions - view along the sliding direction
- Figure 2.: shows the same device - view from above
- Figure 3.: shows the same device - partial cross-section A-A from Figure 2.
- Figure 4.: shows the same device - partial cross-section B-B from Figure 3., without consoles 11
- Figure 5.: shows sliding door with guide beam and the guiding device - side view
- Figure 6.: shows sliding door from Figure 5. - view from above
- Figure 7.: shows connecting of the device to a firm wall - viewed in the movement direction
- Figure 8.: shows connecting of the device to a column - viewed in the movement direction
- Figure 9.: shows connecting of the device to floor, for guiding of hanging sliding door or other hanging constructions - view along the sliding direction

### 6. DETAILED DESCRIPTION OF AN INVENTION EMBODIMENT

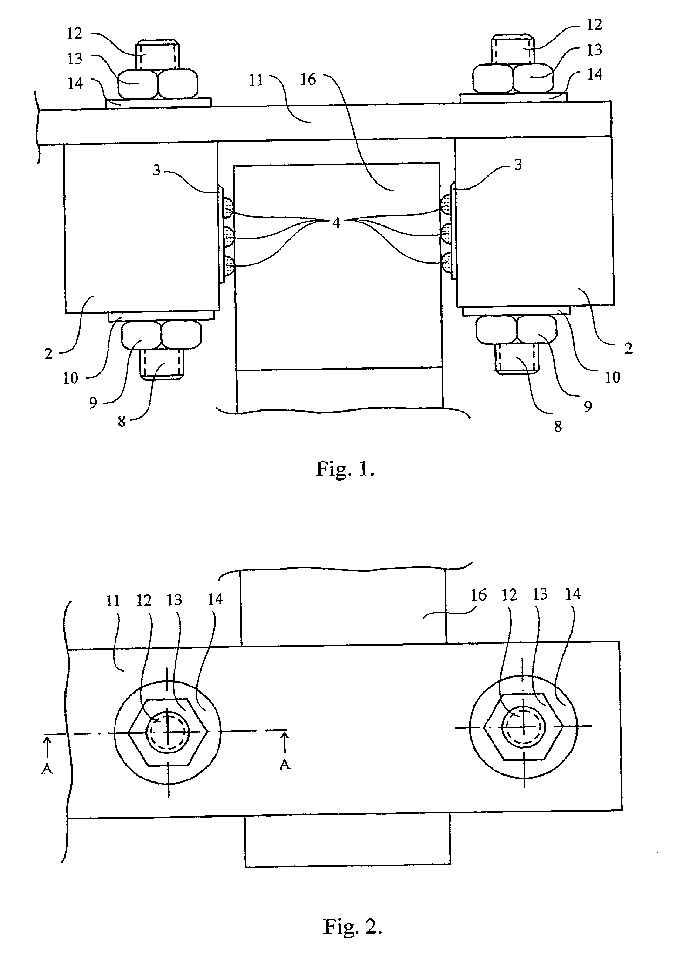

The device for guiding of sliding constructions, according to this invention, Figures 1., 2., 3. and 9., consists of at least two mutually distanced guiding wheels 1, housed in respective protective boxes 2 which, at their upper sides, are each connected to the console 11 or consoles 21 by a first bolt 12, a washer 14 and a nut 13. Openings 15 in the console 11 or the consoles 21, through each of which one first bolt 12 passes, have a longitudinal widening, so that the protective boxes 2 with the respective guiding wheels 1 can be connected closer or farther from guide beam 16, regulating thus the force of pressure of the guiding wheels 1 to the guide beam 16 which, by straight or circular line movement and pressure against the guiding wheels 1 caused by friction, turns the guiding wheels 1.

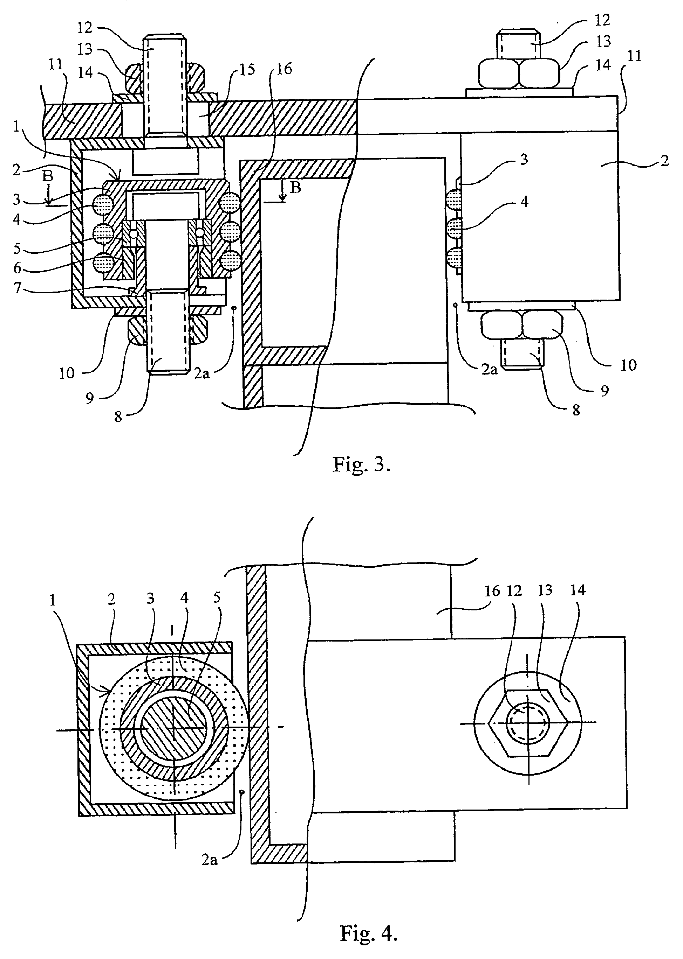

The guiding wheel 1, Figures 3. and 4., comprises: rotating housing 3, rubber rings 4, roller or ball bearing 5, bearing positioner 6, immobile stopper 7, second bolt 8, nut 9 and washer 10.

Each guiding wheel 1 has a rotating housing 3, at the outer side of which there are circular, mutually distanced, grooves that receive rubber rings 4.

On the second bolt 8, there is firmly held the immobile inner part of a roller or ball bearing 5. On the roller or ball bearing 5, there is firmly held each rotating housing 3. The outer part of the roller or ball bearing 5 is fixed in each rotating housing 3 with the bearing positioner 6. The inner part of the roller or ball bearing 5 leans against the stopper 7, and through them passes each second bolt 8 that, through the respective roller or ball bearing 5, keeps the rotating housing 3 at a certain distance from the respective protective box 2. Each second bolt 8, with a respective nut 9 and washer 10 at its bottom side, is connected with the lower side of the respective protective box 2.This way, the rotating housing 3 retains a constant distance from the protective box 2 and rotates freely on the roller or ball bearing 5.

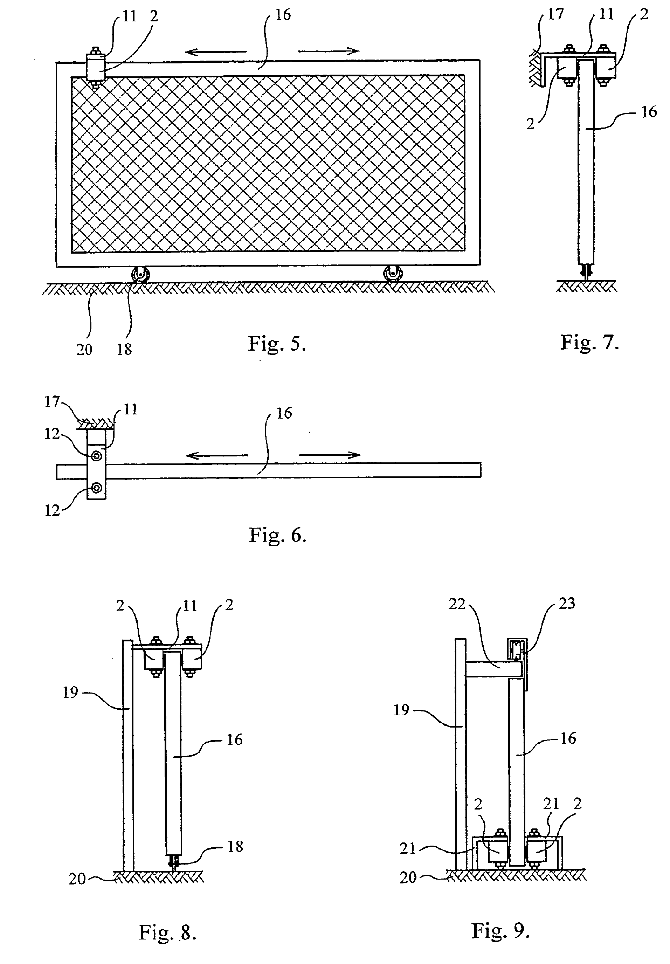

Between the guiding wheels 1 slides the guide beam 16. The guide beam 16 can make part of a door or another sliding construction that moves in a straight or circular line, on carrying wheels 18, Figure 5., or hung on hanging carrying wheels 23, Figure 9.

The guiding wheels 1 are, through the rubber rings 4, in constant contact with the guide beam 16. When the door or another sliding construction is being moved, the guide beam 16, due to the contact with the rings, turns the rings 4 with the rotating housing 3 and the outer part of the bearing around the inner, fixed, part of the roller or ball bearing 5. The roller or ball bearing enables silent and easy turning of the guiding wheel, free of wear and maintenance, over a long period of time.

The rings 4 are of round, square, oval or other cross-section, and made of a material of fine friction coefficient, leaving no traces on the guide beam, elastic and minimally wearing in use - normally rubber. Due to its elasticity, thermal expanding and shrinking of the guide beam and the guiding wheels, as well as minor unevenness at guide beams, are of little importance to the easiness and precision of guiding. Replacing of worn out rings is quick, simple and cheap. The number and shape of rings is determined in accordance to the size of the sliding construction and the expected side pressure of the sliding construction to the guiding wheels. Sliding doors normally use two to three rings of round cross-section at each guiding wheel.

The clearance 2a between the protective box 2 and the guide beam 16 is decreased to the minimum, so that fingers cannot enter it, which eliminates the possibility of injuries. The protective box protects persons from injuries and guiding wheel from weather. The rotating housing 3 protects the roller or ball bearing from water, dirt and freezing between the moving and non-moving parts of the guide wheel.

The guiding-wheel console 11 may be connected to a firm wall, Figure 7, or a vertical column 19 that is fixed to the floor 20, Figure 8. Where the sliding constructions are hung by hanging consoles 23 on supports 22, the guiding device is situated at the bottom side of the sliding construction, Figure 9.

Maintenance of the device for guiding of sliding constructions is reduced to the minimum and consists of replacing of worn out rings 4, once every 10 to 15 years.

### 7. INVENTION APPLICATION

The device for guiding of sliding constructions, according to this invention, will be normally used with yard and warehouse sliding doors of straight or circular line of movement. It can also be applied to window wings and other sliding constructions. The device works silently, the guiding is safe, permanently precise, almost friction free and with no danger of injury. Its use causes no damages to guide beams and stands lesser unevenness at the guide beams. It can be fitted easily, quickly and cheaply instead of the present guiding wheels at almost all sliding constructions.

Manufacturing of parts of the device is simple and of materials easily available in the market.

## Claims

1. Device for guiding of sliding constructions, consisting of at least one console (11, 21) and at least two mutually distanced guiding wheels (1) between which is guided a guide beam (16) of the sliding construction, the guiding wheels (1) being housed in respective protective boxes (2) which, at their upper sides, are each connected to the console (11) or consoles (21) by a first bolt (12), a washer (14) and a nut (13), there being openings (15) in the console (11) or the consoles (21), through each of which one first bolt (12) passes, the openings (15) having a longitudinal widening, so that the protective boxes (2) with the respective guiding wheels (1) can be connected closer or farther from the guide beam (16), regulating thus the force of pressure of the guiding wheels (1) to the guide beam (16) which, by straight or circular line movement and pressure against the guiding wheels (1) caused by friction, turns the guiding wheels (1) and wherein each guiding wheel (1) has a rotating housing (3), at the outer side of which there are circular, mutually distanced, grooves that receive rubber rings (4); a second bolt (8), on which is firmly held the immobile inner part of a roller or ball bearing (5); each rotating housing (3) being firmly held on the rotating outer part of the roller or ball bearing (5); in each rotating housing (3) there being firmly placed a bearing positioner (6); each second bolt (8) passing through an immobile stopper (7) that, through the respective roller or ball bearing (5), keeps the rotating housing (3) at a certain distance from the respective protective box (2); each second bolt (8), with a respective nut (9) and washer (10) at its bottom side, being connected with the lower side of the respective protective box (2).

2. Device for guiding of sliding constructions, as claimed in Claim 1., *wherein,* the rings (4) may be of round, square, oval or any other cross-section, made of a soft material resistant to wear and leaving no traces at the guide beam.

3. Device for guiding of sliding constructions, as claimed in Claims 1. and 2., *w*h*erein,* the device is fixed by the console (11) to a firm wall (17) or a vertical column (19) fixed to the floor (20).

4. Device for guiding of sliding constructions, as claimed in Claims 1. and 2., *wherein,* where the sliding doors or other sliding constructions are hung by hanging wheels (23) on supports (22), the device is fixed to the floor by consoles (21).

5. Device for guiding of sliding constructions, as claimed in Claims 1. to 4., *w h e r e i n ,* it is applied to sliding constructions that are moved along straight or circular lines.

## Patentansprüche

1. Vorrichtung zur Führung von verschiebbaren Elementen, die aus mindestens einem Träger (11, 21) und mindestens zwei voneinander entfernten Führungsrollen besteht (1), zwischen denen ein Führungsprofil (16) der Gleitkonstruktion führt, die Führungsrollen (1) sind in dazugehörende Schutzkasten untergebracht (2), die auf der Oberseite mit der ersten Schraube (12), Unterlegscheibe (14) und Mutter (13) an den Träger (11) oder die Träger (21) befestigt sind, mit Öffnungen (15) am Träger (11) oder den Trägem (21), durch die eine erste Schraube geht (12), die Öffnungen (15) haben eine längsseitige Erweiterung, so dass die Schutzkasten (2) mit den dazugehörenden Führungsrollen (1) dem Führungsprofil näher gebracht oder von ihm entfernt werden können (16), wodurch der Druck der Führungsrollen (1) auf das Führungsprofil geregelt werden kann (16), durch eine gradlinige oder kreisende Bewegung und einen Druck auf die Führungsrollen (1), unter Einwirkung von Reibung, dreht das Führungsprofil die Führungsrollen um (1) und **dadurch gekennzeichnet, dass** jede Führungsrolle (1) über ein Drehgehäuse verfügt (3), das von der Außenseite mit runden, voneinander entfernten Nuten für die Anbringung von Gummiringen versehen ist (4); eine zweite Schraube (8), an die das feste Innenteil des Wälzlagers (5) befestigt ist; jedes Drehgehäuse (3) ist fest am drehenden Außenteil des Wälzlagers angebracht (5); in jedem Drehgehäuse (3) ist eine Lagersicherung fest untergebracht (6); jede zweite Schraube (8) geht durch einen festen Anschlag (7), der über das dazugehörende Wälzlager (5) das Drehgehäuse (3) auf einem bestimmten Abstand vom Schutzkasten (2) hält; jede zweite Schraube (8) ist mit der Mutter (9) und der Unterlegscheibe (10) auf der unteren Seite mit der niedriger gelegenen Seite des Schutzkastens (2) verbunden.

2. Vorrichtung zur Führung von verschiebbaren Elementen, laut Anspruch 1, dadurch gekenntzeichnet, dass die Ringe (4) eine runde, quadratische, ovale oder sonstige Form aufweisen, aus einem verschleißfesten Material, das auf dem Führungsprofil keine Spuren hinterlässt, hergestellt sind.

3. Vorrichtung zur Führung von verschiebbaren Elementen, laut Anspruchs 1 und 2, **dadurch gekennzeichnet, dass** die Einrichtung über einen Träger (11) an eine feste Wand (17) oder einen vertikalen Pfeiler (19) angeschlossen wird, der im Boden befestigt ist (20).

4. Vorrichtung zur Führung von verschiebbaren Elementen, laut Anspruchs 1 und 2, **dadurch gekennzeichnet, dass** die Einrichtung beim Führen von hängenden Gleittüren oder hängenden verschiebbaren Elementen, die auf hängende Rollen (23) auf einer Stütze (22) aufgehängt werden, über einen Träger (21) in den Boden (20) befestigt wird.

5. Vorrichtung zur Führung von verschiebbaren Elementen, laut Anspruchs 1 bis 4, **dadurch gekennzeichnet, dass** sie bei verschiebbaren Elementen mit gradliniger oder kreisender Bewegung eingesetzt werden kann.

## Revendications

1. Le dispositif étant prévu pour le guidage des constructions coulissantes, qui se compose au moins d'un support (11, 21) et d'au moins deux rouleaux de guidage éloigné l'un de l'autre (1) entre lesquels se trouve un profile de guidage (16) de la construction coulissante, les rouleaux de guidage (1) se trouvent dans les boîtes de protection appartenant (2) qui, sur le dessus, sont fixés au support (11) ou supports (21) à l'aide de premier vis (12), rondelle (14) et écrou (13), avec les ouvertures (15) dans le support (11) ou les supports (21), par lesquelles passe le premier vis (12), les ouvertures (15) ont un élargissement longitudinal de sorte que les boîtes de protection (2) avec les rouleaux de guidage appartenant (1) peuvent se rapprocher ou s'éloigner du profil de guidage (16) et de cette manière régler la pression des rouleaux de guidage (1) sur le profil de guidage (16), qui, par mouvement linéaire ou circulaire et par pression sur les rouleaux de guidage (1), sous l'influence d'un frottement, tourne les rouleaux de guidage (1) et **caractérisé par le fait que** chaque rouleau de guidage (1) a un boîtier rotatif (3), sur lequel se trouvent, de coté extérieur, les rainures circulaires écartées l'une des autres, pour le logement des bagues en caoutchouc (4); au deuxième vis (8), à laquelle est solidement attaché l'élément intérieur fixe du palier à rouleaux (5); chaque logement rotatif (3) est fixé solidement à la partie extérieure rotative du palier à rouleaux (5); dans chaque palier à rouleaux (3) se trouve dans une position solide une protection du palier (6); chaque deuxième vis (8) passe par une butée fixe (7) qui, à travers le palier à rouleaux correspondant (5), tient le boîtier rotatif (3) à une distance déterminée de la boîte de protection (2); chaque deuxième vis (8), avec l'écrou appartenant (9) et la rondelle (10) au dessous, est liée sur le côté inférieur de la boîte de protection correspondant (2).

2. Le dispositif pour le guidage des constructions coulissantes, selon la revendication 1, **caractérisé par le fait que** les bagues (4) montrent une forme ronde, ovale ou quelconque, fabriqué d'un matériel souple, résistant à l'usure et laissant aucunes traces sur le profil de guidage.

3. Le dispositif pour le guidage des constructions coulissantes, selon les revendications 1 et 2, **caractérisé par le fait que** le dispositif est relié, à travers le support (11) à un mur ferme (17) ou à mât vertical (19), fixé dans le sol (20).

4. Le dispositif pour le guidage des constructions coulissantes, selon les revendications 1 et 2, **caractérisé par le fait que** le dispositif, lors du guidage des portes coulissantes suspendues ou constructions coulissantes suspendues, suspendues aux rouleaux suspendus (23) sur l'appui (22), à travers le support (21) fixé dans le sol (20).

5. Le dispositif pour le guidage des constructions coulissantes, selon les revendications 1 à 4, **caractérisé par le fait qu'**il est utilisé sur des constructions coulissantes avec mouvement linéaire et circulaire.
